# EUROPÄISCHE PATENTANMELDUNG

(11) **EP 1 510 788 A2**
(43) Veröffentlichungstag der Anmeldung: **02.03.2005**
(21) Anmeldenummer: 04016193.7
(22) Anmeldetag: 09.07.2004
(51) Int. Cl.: G01D 5/165

(54) **Potentiometervorrichtung zur Erfassung von Ventilpositionen**

(30) Priorität: 28.08.2003 DE 10340034
(71) Anmelder: Pierburg GmbH, 41460 Neuss (DE)
(72) Erfinder: Junker, Frank, Dr., 40545 Düsseldorf (DE)
(74) Vertreter: Ter Smitten, Hans

(57) **Zusammenfassung**

Potentiometervorrichtung zur Erfassung von Ventilpositionen, wobei ein Spannungssignal U_{S} an eine Steuereinheit (4), die einen A/D Wandler (16) aufweist, übertragbar ist, mit einem Trägerelement (8) auf dem mindestens eine Schleiferbahn mit einem damit in Kontakt stehenden Schleiferelement angeordnet ist, wobei die Schleiferbahn (7) zwischen eine Versorgungsspannung U_{V} der Steuereinheit (4) und Masse geschaltet ist und das Schleiferelement (9) mit einem Schutzwiderstand (10) über einen Ausgang (12) mit der Steuereinheit (4) verbunden ist, wobei die Steuereinheit (4) einen Widerstand (17) zur Erkennung eines Kabelabfalls aufweist,
- der als ein Pull-Down-Widerstand zwischen Spannungssignal U_{S} und Masse, oder
- der als ein Pull-Up-Widerstand zwischen Versorgungsspannung U_{V} und Spannungssignal U_{S} ausgeführt ist,
wobei am Ausgang (12) ein Widerstand (11) vorgesehen ist, der im ersten Fall zwischen Versorgungsspannung U_{V} und dem Spannungssignal U_{S} als ein Pull-Up-Widerstand und der im zweiten Fall zwischen dem Spannungssignal U_{S} und Masse als ein Pull-Down-Widerstand vorliegt.

## Beschreibung

Die Erfindung betrifft eine Potentiometervorrichtung zur Erfassung von Ventilpositionen, wobei ein Spannungssignal Uₛ an eine Steuereinheit, die einen A/D Wandler aufweist, übertragbar ist, mit einem Trägerelement auf dem mindestens eine Schleiferbahn mit einem damit in Kontakt stehenden Schleiferelement angeordnet ist, wobei die Schleiferbahn zwischen einer Versorgungsspannung Uᵥ der Steuereinheit und Masse geschaltet ist und das Schleiferelement mit einem Schutzwiderstand über einen Ausgang mit der Steuereinheit verbunden ist, wobei die Steuereinheit einen Widerstand zur Erkennung eines Kabelabfalls aufweist, der als ein Pull-Down-Widerstand zwischen Spannungssignal Uₛ und Masse, oder als ein Pull-Up-Widerstand zwischen Versorgungsspannung Uᵥ und Spannungssignal Uₛ ausgeführt ist.

Derartige Potentiometervorrichtungen sind hinlänglich bekannt und werden zur Positionserfassung z.B. bei Drosselklappen-, Abgasrückführventilen etc. eingesetzt. Um eine Fehlererkennung für Kurzschlüsse und Kabelabfall an den Potentiometeranschlüssen zu gewährleisten, ist es bereits bekannt, sowie in der DE 40 20 106 C 2 beschrieben, in einer Auswerteschaltung der Steuereinheit einen Pull-Down-Widerstand oder einen Pull-Up-Widerstand derart vorzusehen, daß das Spannungssignal am A/D Wandler als Fehlersignal, d. h. entweder als unplausibel niedriges Potential oder als unplausibel hohes Signal, vorliegt. Eine derartige Potentiometervorrichtung weist den Nachteil auf, daß auch bei hohen sogenannten Rauschwiderständen die zwischen Schleiferbahn und Schleiferelement, beispielsweise durch Verunreinigung oder Reibungspolymere entstehen können, ein Fehlersignal erzeugt wird. Die Gefahr von hohen Rauschwiderständen ergibt sich insbesondere bei Abgasrückführventilen, die über längere Zeit im Offset-Bereich betrieben werden können und dementsprechend über eine gewisse Zeit ständig geschlossen sind, so daß das Schleiferelement für diese Zeit nicht über die Schleiferbahn bewegt wird. Dies führt dann zu dem unerwünschten Fehlersignal, obwohl eine Diagnose auch gar nicht benötigt wird, da das Ventil im Offset-Bereich betrieben wird, der nicht emmissionsrelevant und damit diagnoserelevant ist. Aus der DE 40 20 106 C 2 ist auch eine Lösung bekannt, mit der Rauschspitzen am Ausgangssignal der Potentiometervorrichtung bestmöglich unterdrückt werden sollen. Diese Lösung ist jedoch konstruktiv aufwendig, da sie verschiedene Spannungszustände in der Steuereinheit benötigt.

Der Erfindung liegt daher die Aufgabe zugrunde, eine Potentiometervorrichtung zu verschaffen, die auf einfache Weise ein fehlerhaftes Ausgangssignal aufgrund von Rauschwiderständen im Offset-Betrieb verhindert.

Diese Aufgabe wird dadurch gelöst, daß am Ausgang ein Widerstand vorgesehen ist, der im ersten Fall zwischen Versorgungsspannung Uᵥ dem Spannungssignal Uₛ als ein Pull-Up-Widerstand und der im zweiten Fall zwischen dem Spannungssignal Uₛ und Masse als ein Pull-Down-Widerstand vorliegt.

Auf diese besonders einfache Weise liegt am Eingang der Steuereinrichtung bei intakten Kabelverbindungen immer ein ausreichend plausibles Spannungssignal vor und werden offensichtlich fehlerhafte Spannungssignale im Offset-Bereich verhindert.

Als besonders vorteilhaft hat es sich erwiesen, daß das Verhältnis zwischen dem Widerstand und dem Widerstand im ersten Fall im Bereich von 3:1 bis 8:1 und im zweiten Fall im Bereich von 1:8 bis 1:3 liegt.

Dabei ist es möglich den Widerstand direkt auf dem Trägerelement anzuordnen. Eine andere Möglichkeit, die insbesondere zur einfachen Nachrüstung geeignet ist, besteht darin den Widerstand in einem Steckerelement anzuordnen, das auf den Ausgang des Trägerelementes aufsteckbar ist. Der eigentliche Ausgang der Potentiometervorrichtung, über den mittels Kabel die Verbindung zur Steuereinheit herstellbar ist, liegt nun also am Steckerelement vor. Dabei kann das Steckerelement natürlich auch auf einen Eingang der Potentiometervorrichtung zur Übertragung der Versorgungsspannung Uᵥ aufsteckbar sein.

Ein Ausführungsbeispiel ist in der Zeichnung dargestellt und wird nachfolgend beschrieben, hierbei zeigt:
- Figur 1: schematisch den Ablauf der Steuerung und Lagerückmeldung eines Abgasrückführventils bei einer Brennkraftmaschine, und
- Figur 2: ein Blockschaltbild der erfindungsgemäßen Potentiometervorrichtung mit Steuereinheit.

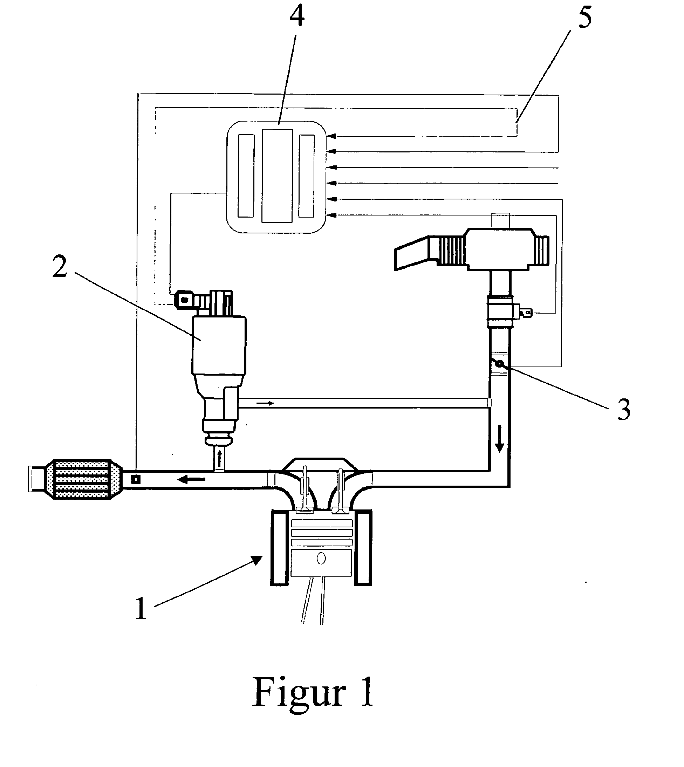

Figur 1 zeigt schematisch die Abgasrückführung bei einer Otto-Brennkraftmaschine. Das von einer Brennkraftmaschine 1 ausgestoßene Abgas kann über einen Abgasrückführventil 2 dem Luftstrom stromab eines Drosselklappenventils 3 zugeführt werden. Mit 4 ist eine Steuereinheit für das Abgasrückführventil 2 gekennzeichnet, die neben anderen Motorkenngrößen auch eine Lagerückmeldung 5 eines nicht dargestellten Potentiometers 6 erhält, um die Abgasrückführung über das Abgasrückführventil 2 zu regeln.

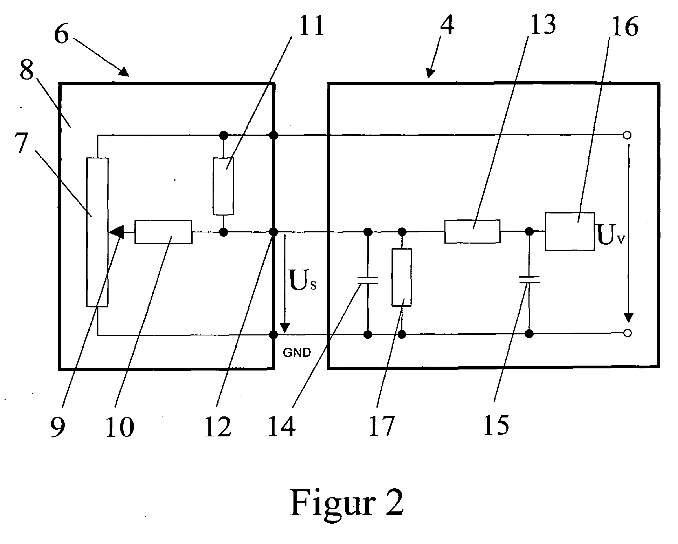

Figur 2 zeigt ein Blockschaltbild einer erfindungsgemäßen Potentiometervorrichtung 6. Des weiteren zeigt Figur 2 einen Teil der Beschaltung des Steuergeräts 4. Auf bekannte Weise ist mindestens eine Schleiferbahn 7 auf einem Trägerelement 8 zwischen einer Versorgungsspannung Uᵥ der Steuereinheit 4 und Masse geschaltet. Auf die Schleiferbahn 7 greift ein Schleiferelement 9 an. Des weiteren weist die Potentiometervorrichtung einen Pull-Up-Widerstand 11 auf, der zwischen der Versorgungsspannung Uᵥ und des Spannungssignals Uₛ geschaltet ist. Das Spannungssignal Uₛ wird auf bekannte Weise über einen Ausgang 12 an die Steuereinheit 4 weitergegeben, wobei das Signal zunächst auf bekannte Weise durch einen Widerstand 13 und Kondensatoren 14, 15 geglättet wird, bevor ein A/D Wandler 16 das Signal digitalisiert. Um einen Kabelabfall zwischen Schleiferelement 9 und Steuereinheit 4 zu detektieren, ist auf bekannte Weise ein Pull-Down-Widerstand 14 vorgesehen. Sollte also ein Kabelabfall zwischen Potentiometervorrichtung 6 und Steuereinheit 4 vorliegen, liegt an der Steuereinheit 4 kein Spannungssignals Uₛ mehr an. Die verbleibenden Restspannungen, die durch die Kondensatoren 14, 15 aufrecht erhalten werden, werden durch den Pull-Down-Widerstand 17 gegen Masse geschaltet.

Im Falle eines hohen Rauschwiderständen am Schleiferelement 9 beim längeren Offset-Betrieb des Abgasrückführventils 2, wird über den Pull-Up-Widerstand 11 ein plausibles Spannungssignal Uₛ an die Steuereinheit 4 übergeben. So liegt bei einem Pull-Up-Widerstand 11 von 400 kΩ und einem Pull-Down-Widerstand 17 von 100 kΩ ein Spannungssignal von ca. 1 V am A/D Wandler an, so daß die Anforderungen an den Betrieb im Offset-Bereich erfüllt sind.

Anstatt den Widerstand 11 direkt auf dem Trägerelement 8 anzubringen, ist es auch möglich ihn in einem nicht dargestellten Steckerelement anzuordnen, das auf den Ausgang 12 des Trägerelementes 8 aufsteckbar ist. Nach dem Aufstecken des Stekkers wird dann der Ausgang 12 durch den zur Steuereinheit 4 gerichteten Anschluß des Steckerelementes gebildet.

Die Funktionalität bleibt auch bei der Ausführung des Widerstandes 17 als Pull-Up-Widerstand gewährleistet, wenn dementsprechend der Widerstand 11 als Pull-Down-Widerstand ausgeführt ist.

## Patentansprüche

1. Potentiometervorrichtung zur Erfassung von Ventilpositionen, wobei ein Spannungssignal Uₛ an eine Steuereinheit (4), die einen A/D Wandler (16) aufweist, übertragbar ist, mit einem Trägerelement (8) auf dem mindestens eine Schleiferbahn mit einem damit in Kontakt stehenden Schleiferelement angeordnet ist, wobei die Schleiferbahn (7) zwischen eine Versorgungsspannung Uᵥ der Steuereinheit (4) und Masse geschaltet ist und das Schleiferelement (9) mit einem Schutzwiderstand (10) über einen Ausgang (12) mit der Steuereinheit (4) verbunden ist, wobei die Steuereinheit (4) einen Widerstand (17) zur Erkennung eines Kabelabfalls aufweist,
- der als ein Pull-Down-Widerstand zwischen Spannungssignal Uₛ und Masse, oder
- der als ein Pull-Up-Widerstand zwischen Versorgungsspannung Uᵥ und Spannungssignal Uₛ ausgeführt ist,
**dadurch gekennzeichnet, daß** am Ausgang (12) ein Widerstand (11) vorgesehen ist, der im ersten Fall zwischen Versorgungsspannung Uᵥ und dem Spannungssignal Uₛ als ein Pull-Up-Widerstand und der im zweiten Fall zwischen dem Spannungssignal Uₛ und Masse als ein Pull-Down-Widerstand vorliegt.

2. Potentiometervorrichtung nach einem der vorherigen Ansprüche, **dadurch gekennzeichnet, daß** das Verhältnis zwischen dem Widerstand (11) und dem Widerstand (17) im ersten Fall im Bereich von 3:1 bis 8:1 und im zweiten Fall im Bereich von 1:8 bis 1:3 liegt.

3. Potentiometervorrichtung nach Anspruch 1 oder 2, **dadurch gekennzeichnet, daß** der Widerstand (11) auf dem Trägerelement (8) angeordnet ist.

4. Potentiometervorrichtung nach Anspruch 1 oder 2, **dadurch gekennzeichnet, daß** der Widerstand (11) in einem Steckerelement angeordnet ist, das auf den Ausgang (12) des Trägerelementes (8) aufsteckbar ist.
